# EUROPÄISCHE PATENTSCHRIFT

(11) **EP 3 242 043 B1**
(45) Veröffentlichungstag und Bekanntmachung des Hinweises auf die Patenterteilung: **18.09.2019**
(21) Anmeldenummer: 17168755.1
(22) Anmeldetag: 28.04.2017
(51) Int. Cl.: F16B 5/02, A47K 3/17, A47B 91/02

(54) **ABSTANDSELEMENT MIT VERSTELLBARER LÄNGE**
SPACER ELEMENT WITH ADJUSTABLE LENGTH
ÉLÉMENT D'ÉCARTEMENT RÉGLABLE EN LONGUEUR

(30) Priorität: 06.05.2016 AT 504182016
(43) Veröffentlichungstag der Anmeldung: 08.11.2017
(73) Patentinhaber: Artweger GmbH & Co. KG, 4820 Bad Ischl (AT)
(72) Erfinder: Zierler, Wolfgang, 4820 Bad Ischl (AT)
(74) Vertreter: Patentanwälte Pinter & Weiss OG

(56) Entgegenhaltungen:
- WO-A1-02/04174
- WO-A1-99/47819
- DD-A1- 226 722
- DE-A1- 10 104 833
- DE-U1- 20 000 358
- US-A1- 2010 244 640
- US-A1- 2015 055 279

## Beschreibung

Die gegenständliche Erfindung behandelt eine Vorrichtung zur Verstellung der Länge eines Abstandselements, sowie ein höhenverstellbares Bodenelement für eine Feuchtraumeinrichtung mit zumindest einer erfindungsgemäßen Vorrichtung..

Um eine Position eines Elements, beispielsweise einer Abdeckung, zu verändern oder zu fixieren, werden oftmals Stellschrauben verwendet. Die Neigung einer Bodenplatte, beispielsweise einer Duschwanne, muss justierbar sein, damit eine Niveauanpassung, z.B. für den Abfluss von Duschwasser, ermöglicht wird. Eine Möglichkeit, die Bodenplatte zu fixieren, wäre natürlich eine Vorjustierung von Abstandshaltern, woraufhin die Bodenplatte eingelegt wird, indem es auf den Abstandshaltern platziert wird. Diese Methode erfordert jedoch eine passgenaue Einstellung der Abstandshalter vor dem Platzieren der Bodenplatte, was mühsam und aufwendig ist. Wenn wie üblich vier Abstandshalter, d.h. einer pro Ecke einer rechteckigen Bodenplatte, angebracht sind, so kann es bei ungenauer Justierung leicht zu einem Wackeln der Bodenplatte kommen. Auch wenn aufgrund passgenauer Justierung ein Wackeln vermieden werden konnte, so könnte es im Nachhinein erforderlich sein, die Neigung des Duschbodens nach zu justieren, beispielsweise um den optimalen Abfluss von Duschwasser zu ermöglichen. Es ist oftmals üblich aufgrund einer gewünschten stabilen Positionierung einer Bodenplatte auch mehr als vier Abstandshalter zu verwenden. Insbesondere drei Abstandshalter sind nicht ausreichend, da die Bodenplatte schaukeln oder sich bei Belastung in den Randbereichen auch verbiegen kann. Bei der soeben beschriebenen Lösung müsste zudem für jede (Neu)Einstellung der Abstandshalter die Bodenplatte herausgenommen werden. Alleine das Herausnehmen einer festsitzenden Bodenplatte an sich erweist sich oftmals bereits als schwierig. Zudem bedeutet das Herausnehmen der Bodenplatte, darauffolgende Nachjustierungen und das Neueinsetzen der Bodenplatte einen hohen Aufwand durch unnötige sich wiederholende Arbeitsschritte.

Will man nun einen Zugriff auf die Stellschrauben von außen ermöglichen, entstehen naturgemäß Spalten, Ritzen und dergleichen an der Oberfläche des Elements. Wünschenswert ist somit die Vermeidung von sichtbaren Stellschrauben, insbesondere im Bereich der Hygiene, da durch entstehende Spalten, Ritzen, etc. ein Ansammeln von Schmutz und Bakterien an dem Element ermöglicht wird und die Dichtheit des zu verstellenden Elements, also der Bodenplatte, oft nicht gewährleistet werden kann. Somit wäre eine glatte, homogene Oberfläche der Bodenplatte wünschenswert.

Die US 9,190,198 B2 offenbart eine Vorrichtung zum Fixieren von Schrauben als Drehelemente, wobei ein magnetischer Einstellschlüssel verwendet wird, um durch eine nichtmagnetische Abdeckung magnetische Schrauben zu fixieren. Damit wird es ermöglicht Schrauben zu fixieren, ohne von den Schrauben hervorgerufene, von außen sichtbare, Spalten zu erzeugen. Damit wird jedoch lediglich eine Fixierung und keine Einstellung einer Abdeckung ermöglicht, was im Bereich elektronischer Geräte sinnvoll sein mag, jedoch für die Montage einer Bodenplatte nicht zufriedenstellend ist. Dabei ist der Magnetabstand der Magnete des Einstellschlüssels und der Schrauben nicht konstant. Die US 2010/0244640 A1 offenbart ein Abstandselement für Möbelstücke, das verstellbar ist.

Es ist somit die Aufgabe der gegenständlichen Erfindung, eine Vorrichtung anzugeben, die es ermöglicht die Position, insbesondere die Höhe oder das Niveau, einer Platte von außen zu ändern, wobei Spalten, Ritzen, etc. vermieden werden sollen.

Diese Aufgabe wird erfindungsgemäß gelöst, indem ein Einstellschlüssel und ein Drehelement vorhanden sind, wobei der Einstellschlüssel und das Drehelement jeweils zumindest einen Magnet aufweisen, die angeordnet sind um die Übertragung der Drehbewegung des Einstellschlüssels auf das Drehelement über ein erzeugtes Magnetfeld zu ermöglichen, wobei ein Drehelement als Mitnehmer für ein Stellorgan eines Abstandselements ausgebildet ist, wobei durch Verdrehen des Stellorgans mit dem Drehelement die Länge des Abstandselements in Richtung der Drehachse veränderbar ist. Durch Drehung eines Einstellschlüssels wird die Drehbewegung durch Magnete im Einstellschlüssel und im Drehelement auf das Drehelement übertragen. Dabei ist keine direkte Berührung zwischen Einstellschlüssel und Drehelement erforderlich, wodurch eine Einstellung der Länge des Abstandselements auch durch zwischen Einstellschlüssel und Drehelement liegende nichtmagnetische Stoffe hindurch, beispielsweise einer Platte, erfolgen kann.

Vorteilhafterweise ist das Drehelement über eine formschlüssige Verbindung mit dem Stellorgan verbunden, womit die Übertragung der Drehbewegung von Drehelement auf Stellorgan sichergestellt wird. Die formschlüssige Verbindung kann sowohl ein Spiel haben, als auch fest sitzen und kann beispielsweise durch eine Nut und eine zugehörige Feder gebildet werden. Dabei kann sich die Nut bzw. die Feder natürlich am Stellorgan oder dem Drehelement befinden.

Zudem kann das Abstandselement eine Gewindehülse mit einem Innengewinde aufweisen, die auf ein Außengewinde des Stellorgans aufgeschraubt ist, wodurch die Gewindestellung von Innengewinde und Außengewinde die Länge des Abstandselements ändert. Es ist natürlich auch vorstellbar, die Gewindehülse mit einem Außengewinde und das Stellorgan mit einem Innengewinde zu versehen, was die Konstruktion des Abstandselements jedoch erschwert. Das Innengewinde und/oder das Außengewinde können/kann natürlich mit einem Anschlag versehen sein, der verhindert, dass die Gewindehülse, z.B. irrtümlich, ganz vom Stellorgan abgeschraubt wird.

Die Gewindehülse kann auf einer dem Einstellschlüssel zugewandten Oberseite eine Öffnung aufweisen in die das Drehelement eingeführt ist. Dies ist insbesondere vorteilhaft, wenn eine formschlüssige Verbindung zwischen Drehelement und Stellorgan vorliegt und das Stellorgan ein Außengewinde aufweist. Die Gewindehülse kann dabei als ein Teil oder auch mehrteilig, vorzugsweise zweiteilig, gefertigt sein.

Weiters kann die Gewindehülse zumindest ein Montageelement aufweisen an das eine in der Höhe zu verstellende Platte anbringbar ist, sodass die Platte zwischen dem zumindest einen Montageelement und Einstellschlüssel angebracht ist. Die Anbringung der Platte an die Montageelemente kann beispielsweise durch Schrauben oder Bolzen oder einen Kleber erfolgen. Die höhenverstellbare Platte kann damit einen konstanten Abstand zwischen dem Einstellschlüssel und dem Drehelement verursachen, was sich auf den Magnetabstand zwischen den Magneten des Stellorgans und des Einstellschlüssels auswirkt. Vorteilhafterweise weisen die Magneten des Einstellschlüssel und die Magneten des Drehelements einen konstanten Magnetabstand auf. Natürlich muss die Dicke der Platte (und die Position der Magneten an Einstellschlüssel und Drehelement) so gewählt werden, dass ein für eine Übertragung der Drehbewegung ausreichendes magnetisches Feld zwischen den Magneten des Stellorgans und des Einstellschlüssels erreicht wird.

Vorteilhafterweise wird das Stellorgan auf einem Ausgleichsfuß gelagert. Damit kann das Stellorgan eine Neigung einnehmen und so auf unebenen Böden eine senkrechte Position einnehmen. Zudem kann der Ausgleichsfuß eine Schalldämmung ermöglichen, d.h. die Schallverbindung von dem Abstandselement, bzw. einer ggfs. an den Montagelementen angebrachten Platte und dem Untergrund zu ermöglichen. Diese Entkopplung kann auch durch ein am Ausgleichsfuß angebrachtes Entkopplungselement aus einem geeigneten Material wie beispielsweise Filz, Gummi, Schaum usw. erfolgen.

Die beschriebene Vorrichtung kann in jeglichen Bereichen verwendet werden, die kontaktlos verstellbare Elemente erfordern. Insbesondere kann ein höhenverstellbares Bodenelement für eine Feuchtraumeinrichtung, vorzugsweise eine Bodenplatte einer Duschwanne, zumindest eine oben beschriebene Vorrichtung zur Höhenverstellung aufweisen, wobei die Höhe des zwischen Einstellschlüssel und Mitnehmer angebrachten Bodenelements durch Drehung des Einstellschlüssels verstellbar ist. Damit wird es ermöglicht, die Höhe des Bodenelements unter Verwendung eines Einstellschlüssels einzustellen, ohne dass sichtbare Spalten, Ritzen, etc. durch Schrauben oder dergleichen sichtbar sind. Auch ist es möglich die Neigung des Bodenelements einzustellen, beispielsweise durch Verwendung mehrerer Vorrichtungen zur Höhenverstellung an mehreren Punkten des Bodenelements, vorzugsweise an den Ecken. Natürlich könnte auch eine Seite des Bodenelements gelagert sein und auf der gegenüberliegenden Seite des Bodenelements Vorrichtungen zur Höhenverstellung angebracht sein, um die Neigung des Bodenelements zu justieren. Natürlich sollte kein großer Druck auf dem Bodenelement lasten, damit eine kontaktlose Verstellung der Länge des Abstandselements ermöglicht wird.

Um eine Positionierung des Einstellschlüssels an ein in der Regel von außen nicht sichtbares Stellorgan zu erleichtern, können Schablonen vorgesehen werden. Die Schablone dient somit zum Positionieren des Einstellschlüssels, wobei zwischen Stellorgan und Einstellschlüssel eine Platte vorgesehen ist. Diese weist eine Ausnehmung und Positioniermittel auf. Die Schablone ist derart ausgestaltet, dass bei Positionierung der Schablone auf der Platte und des Einstellschlüssels in der Ausnehmung, durch ein Zusammenwirken der Positioniermittel und der Platte sich der Einstellschlüssel an der Position des Stellorgans auf der gegenüberliegenden Seite der Platte befindet. Die Positioniermittel können beispielsweise durch den Rand der Schablone gegeben sein. Das Zusammenwirken des Rands der Schablone mit der Platte kann durch Schieben des Randes der Schablone an den Rand der Platte erfolgen. Alternativ kann auch eine z.B. optische Markierung auf oder an der Platte angebracht sein, womit eine Positionierung der Schablone oder auch des Einstellschlüssels selbst ermöglicht wird. Die Schablone und/oder der Einstellschlüssel können vorteilhafterweise sowohl von der Platte abnehmbar, als auch fest mit der Platte verbunden sein. Es kann der Einstellschlüssel natürlich auch über die Bodenplatte bewegt werden, bis die Magneten des Einstellschlüssels mit den Magneten des Drehelements ein magnetisches Feld aufbauen und der Einstellschlüssel sozusagen einrastet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1: eine Explosionsdarstellung einer Ausführungsform der Vorrichtung (10)
- Fig.2a, b: einen Querschnitt/Schrägriss einer Ausführungsform der Vorrichtung (10)
- Fig.3: eine montierte erfindungsgemäße Vorrichtung (10)
- Fig.4: eine Duschwanne mit vier erfindungsgemäßen Vorrichtungen (10)

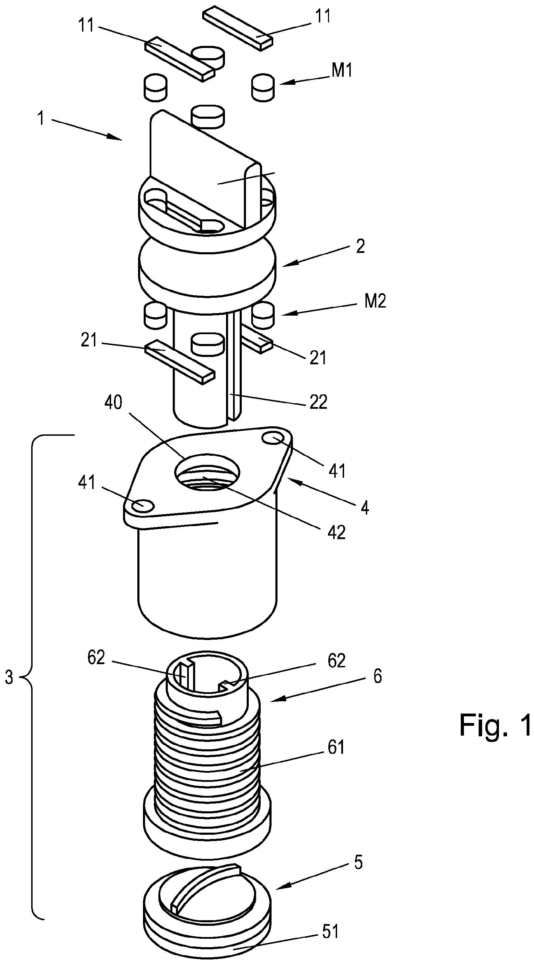

Fig.1 zeigt eine Ausgestaltung einer bevorzugten Ausführungsform der erfindungsgemäßen Vorrichtung 10. Ein Einstellschlüssel 1 ist mit vier Magneten M1 versehen, wobei die Magnete M1 vorteilhafterweise als Neodym-Magnete ausgeführt sind. Die Magnete M1 können beispielsweise in eine im Einstellschlüssel 1 vorgesehene Ausnehmung eingelegt, eingeklebt oder auch in den Einstellschlüssel 1 eingegossen sein. Der Einstellschlüssel 1 kann dabei über ein Griffstück verfügen, das beispielsweise zur Gänze oder zum Teil aus Kunststoff gefertigt sein kann. Durch das Griffstück ist eine einfachere Drehung des Einstellschlüssels 1 möglich. Zur Verstärkung des magnetischen Felds der Magnete M1 kann entlang jeweils mindestens zweier Magnete M1 eine Verstärkungsbrücke 11 aus ferromagnetischem Material angebracht sein. In dieser Ausführung ist jeweils eine Verstärkungsbrücke 21 für ein Paar an Magneten M1 vorgesehen, die ein magnetisches Joch ausbildet.

Weiteres ist ein Abstandselement 3 vorgesehen, das aus einem Drehelement 2, einer Gewindehülse 4, einem Stellorgan 6 und gegebenenfalls einem Ausgleichsfuß 5 besteht. Das Drehelement 2 weist ebenso ein Paar an Magneten M2 auf. Eine Drehbewegung des Einstellschlüssels 1 wird über die magnetische Kopplung zwischen den Magneten M1 des Einstellschlüssels 1 und Magneten M2 des Drehelements 2 übertragen, womit das Drehelement 2 einen Mitnehmer darstellt. Dazu müssen die Magnete M1, M2 natürlich in geeigneter Weise im Einstellschlüssel 1 und im Drehelement 2 positioniert sein.

Die Gewindehülse 4 weist auf der dem Einstellschlüssel 1 zugewandten Seite eine Öffnung 40 auf in die das Drehelement 2 eingeführt werden kann. Weiters ist die Gewindehülse 4 mit einem Innengewinde 42, sowie Montageelementen 41 versehen. Das Stellorgan 6 weist ein auf das Innengewinde 42 abgestimmtes Außengewinde 61 auf. Dadurch ist die Länge des Stellorgans 6 samt aufgeschraubter Gewindehülse 4 über die Gewindestellung verstellbar, womit auch die Länge d des Abstandselements 3 verstellbar ist. Um die Gewindestellung zu ändern, wird das Stellorgan 6 verdreht, was durch Übertragung der Drehbewegung vom Einstellschlüssel 1 auf das Drehelement 2 und in weiterer Folge vom Drehelement 2 auf das Stellorgan 6 erfolgt. Diese Übertragung der Drehbewegung vom Drehelement 2 auf das Stellorgan erfolgt vorteilhafterweise über eine formschlüssige Verbindung, hier über eine Nut 22 am Drehelement 2 und einer passenden, in die Nut 22 eingeführten, Feder 62 am Stellorgan 6. Natürlich könnte sich die Nut 22 auch am Stellorgan 6 und die Feder 62 am Drehelement 2 befinden oder eine andere Art einer formschlüssigen Verbindung, wie z.B. einer profilierten Welle/Nabe oder dergleichen vorgesehen sein. Oder eine ganz andere. Die formschlüssige Verbindung soll natürlich eine Relativbewegung zwischen Stellorgan 6 und Drehelement ermöglichen. Die auf der dem Einstellschlüssel 1 abgewandten Seite des Stellorgans 6 angebrachten Ausgleichsfuß 5 dient dazu das Abstandselement 3 zu lagern, um eine senkrechte Position des Abstandselements 6 auf nicht waagrechtem Boden zu ermöglichen, wobei der Ausgleichsfuß 5 optional ist. Um eine Entkopplung der Schallverbindung vom Abstandselement 3, bzw. einer an den Montageelementen 41 angebrachten Platte 9 zum darunter befindlichen Untergrund, zu ermöglichen kann der Ausgleichsfuß 5 auch mit einem Entkopplungselement 51 aus Filz, Gummi, Schaum, usw. beschichtet werden, oder auch gänzlich aus einem derartigen Material gefertigt sein.

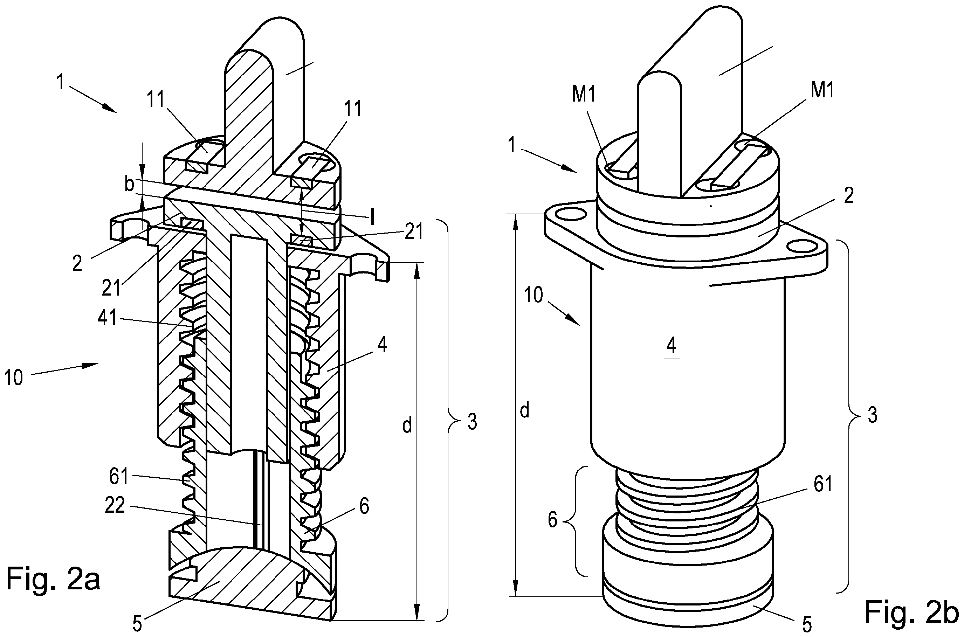

Fig.2 a und b zeigen einen Querschnitt, bzw. einen Schrägriss der Vorrichtung 10. Das Abstandselement 3 weist in Richtung der Drehachse eine veränderbare Länge d auf. Der Einstellschlüssel 1 ist in einem Abstand b vom Drehelement 2 positioniert, wobei der in der Regel konstante Abstand b durch eine Platte 9 (hier nicht eingezeichnet) verursacht wird. Die Magnete M1, M2 des Einstellschlüssels 1 und des Drehelements 2 sind in dieser Darstellung nicht sichtbar, wohl aber die Verstärkungsbrücken 11, 21. Die Magnete M1, bzw. die Verstärkungsbrücken 11 des Einstellschlüssels 1 sind in einem Magnetabstand I von den Magneten M2, bzw. den Verstärkungsbrücken 21 des Drehelements 2 positioniert. Dieser Magnetabstand I ergibt sich durch die bauliche Beschaffenheit des Einstellschlüssels 1 und des Drehelements 2, d.h der Positionierung der Magnete M1, M2, sowie den Abstand b des Einstellschlüssels 1 vom Drehelement 2. Natürlich sind die Magnete M1, M2 des Einstellschlüssels 1, bzw. Drehelements 2 vorteilhafterweise so anzubringen, um den Magnetabstand I zu verringern, idealerweise direkt am Rand des Einstellschlüssels bzw. des Drehelements 2, womit der Magnetabstand I in etwa dem Abstand b entspricht. Bei Verwendung von Neodyn-Magneten ist bei je vier Magneten M1, M2 im Einstellschlüssel 1 und Drehelement 2 ein Magnetabstand I von maximal 5mm vorzusehen, um eine Übertragung der Drehbewegung zu ermöglichen. Bei stärkeren oder einer größeren Anzahl an Magneten M1, M2 kann der Abstand auch vergrößert werden. Eine Drehbewegung des Einstellschlüssels 1 wird also von den Magneten M1 des Einstellschlüssels 1 auf die Magnete M2 des Drehelements 2 übertragen. Die dadurch entstehende Drehbewegung des Drehelements 2 wird wiederum über die formschlüssige Verbindung, z.B. in Form einer Nut 22 und einer Feder 62 (hier nicht sichtbar), auf das Stellorgan 6 übertragen. Da das Stellorgan 6 ein Außengewinde 61 aufweist, auf das eine Gewindehülse 4 mit einem Innengewinde 41 geschraubt ist, wird durch die Drehbewegung des Stellorgans 6 die Ausdehnung des Stellorgans 6 und der Gewindehülse 4 geändert, womit sich auch die Länge d des Abstandselements 3, das ja u.a. das Stellorgan 6 und die Gewindehülse 4 beinhaltet, ändert. Dabei bleibt aber der Abstand b, sowie der Magnetabstand I konstant, d.h. die Wirkung der Magnete M1, M2 ist über den ganzen Stellbereich gleich.

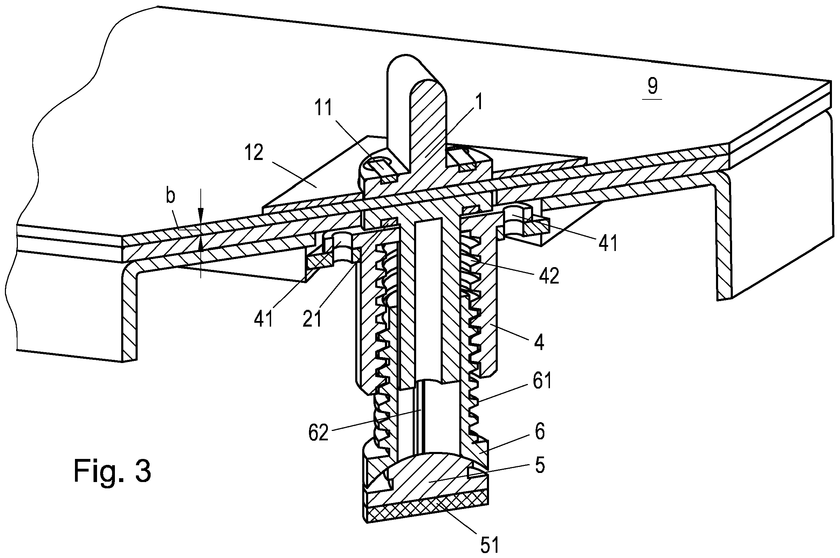

Fig.3 zeigt ein montiertes Abstandselement 3, wobei die Gewindehülse 4 über Montageelemente 41 mit einer Platte 9 verbunden ist. Die Platte 9 befindet sich somit zwischen dem Abstandselement 3 und dem Einstellschlüssel 1. Die Dicke der Platte 9 bestimmt somit den Abstand b von Einstellschlüssel 1 und Abstandselement 3, womit in weiterer Folge der Magnetabstand I bestimmt wird (neben der Positionierung der Magnete M1, M2 im Einstellschlüssel 1 und dem Abstandshalter3). Die durch den Einstellschlüssel 1 auf den Abstandshalter 3 übertragene Drehbewegung ändert wie oben beschrieben die Länge d des Abstandshalters, wodurch die Höhe der Platte 9 eingestellt werden kann. Ebenso ist in der Fig.3 eine Schablone 12 zur Positionierung des Einstellschlüssels 1 an der Position des Stellorgans 6 auf der gegenüberliegenden Seite der Platte 9 dargestellt. Dabei weist die Schablone 12 eine Ausnehmung für die Positionierung des Einstellschlüssel 1 auf, der Schablonenrand dient als Positioniermittel. Bei Positionierung der Schablone 12 auf der Platte 9 und des Einstellschlüssels 1 in der Ausnehmung, wird der Einstellschlüssel 1 durch ein Zusammenwirken der Positioniermittel (also des Randes der Schablone) und der Platte 9 an die gewünschte Position gebracht. Das Zusammenwirken der Positioniermittel und der Platte 9 erfolgt in diesem Fall durch ein bündiges Anlegen des Positioniermittels (des Rands der Schablone) an den Rand der Platte 9.

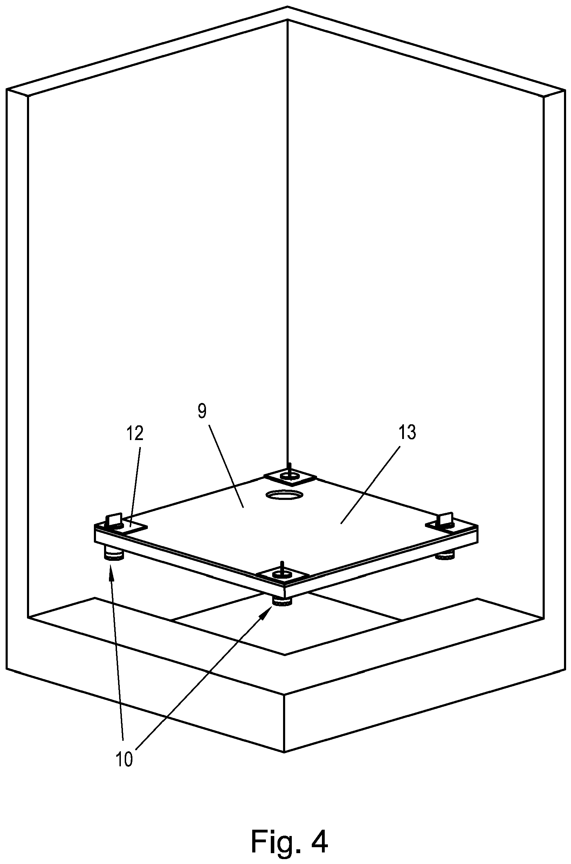

Fig.4 zeigt eine Duschwanne mit einem Bodenelement 13, das aus einer (Boden)Platte 9 und vier erfindungsgemäßen Vorrichtungen 10 an den Ecken der Platte 9 besteht. Durch vier Abstandselemente 3 und Einstellschlüssel 1, wobei letztere mittels Schablonen 12 in die korrekte Position gebracht werden, ist eine Verstellung der Höhe der Platte 9 an vier Punkten möglich, womit innerhalb des Verstellbereichs der Länge d der Vorrichtung 10 jede beliebige Neigung der Platte 9 eingestellt werden kann, ohne die Platte 9 zu entfernen. Dabei werden jegliche Spalten, Ritzen, etc. durch sichtbare Schrauben vermieden, was der Hygiene, gerade in Nassebereichen zuträglich ist, da sich kein Schmutz und keine Bakterien in diesen Spalten, Ritzen, etc. sammeln können. Zudem ist damit eine Dichtheit des Bodenelements gewährleistet.

Um ein selbstständiges, bzw. ungewolltes, Verstellen des Abstandelements 3 zu verhindern, ist das Gewinde bestehend aus Innengewinde 42 und Außengewinde 61 vorzugsweise selbsthemmend ausgeführt. Das bedeutet, dass die Reibung innerhalb des Gewindes so hoch ist, dass dieses nicht durch äußere Belastung des Abstandselements 3, bzw. eines Bodenelements 13, z.B. durch ein Draufsteigen eines Benutzers in Drehung kommt und damit die Länge d der Vorrichtung 10 verstellt. Damit würde ggf. das Bodenelement 13 die voreingestellte und gewünschte Position verändert, also absenken. Diese Reibung im Gewinde kann z.B. durch eine geringe Gewindesteigung oder durch große Flankenflächen des Gewindes, wie z.B. bei einem Trapezgewinde, wie in den Figuren beispielhaft dargestellt, erzielt werden. Auch kann eine Reibung zwischen Gewindehülse 4 und Stellorgan 6 erzeugt werden, oder aber z.B. ein flüssiger Schraubensicherungskleber im Gewinde aufgetragen werden. Dieser Schraubensicherungskleber muss vor der Montage vom Monteur aufgebracht werden und verklebt nach einer definierten Zeit das Innengewinde 41 mit Außengewinde 61. Der Ausgleichsfuß 5 kann eine formschlüssige Verbindung, z.B. über einen Steg wie in Fig. 1 dargestellt, mit dem Stellorgan 6 aufweisen - wobei natürlich das Stellorgan 6 eine passende Ausnehmung aufweisen muss -, sodass sich der Ausgleichsfuß 5 mit dem Stellorgan 6 dreht. Damit kann eine unerwünschte Verstellung der Länge d der Vorrichtung 10 verhindert werden, da das Stellorgan 6 nur verdreht werden kann, wenn sich der Ausgleichsfuß 5 mit dreht, was bei Belastung des Abstandselements 3 aufgrund der Reibung zwischen dem Ausgleichsfuß 5 mit dem Untergrund auszuschließen ist.

## Patentansprüche

1. Vorrichtung zur Verstellung der Länge (d) eines Abstandselements (3), **dadurch gekennzeichnet, dass** die Vorrichtung einen Einstellschlüssel (1) und ein Drehelement (2) umfasst, wobei der Einstellschlüssel (1) und das Drehelement (2) jeweils zumindest einen Magnet (M1, M2) aufweisen, die zur Übertragung der Drehbewegung des Einstellschlüssels (1) auf das Drehelement (2) über ein erzeugtes Magnetfeld angeordnet sind, und wobei das Drehelement (2) als Mitnehmer für ein Stellorgan (6) des Abstandselements (3) ausgebildet ist, wobei durch Verdrehen des Stellorgans (6) mit dem Drehelement (2) die Länge (d) des Abstandselements (3) in Richtung der Drehachse veränderbar ist.

2. Vorrichtung nach Anspruch 1, **dadurch gekennzeichnet, dass** das Drehelement (2) über eine formschlüssige Verbindung mit dem Stellorgan (6) verbunden ist.

3. Vorrichtung nach Anspruch 2, **dadurch gekennzeichnet, dass** die formschlüssige Verbindung als Nut (22) in Längsrichtung und zugehörige Feder (62) ausgebildet ist.

4. Vorrichtung nach einem der Ansprüche 1 bis 3, **dadurch gekennzeichnet, dass** das Abstandselement (3) eine Gewindehülse (4) mit einem Innengewinde (42) aufweist, die auf ein Außengewinde (61) des Stellorgans (6) aufgeschraubt ist **und dass** die Gewindestellung von Innengewinde (42) und Außengewinde (61) die Länge (d) des Abstandselements (3) ändert.

5. Vorrichtung nach Anspruch 4, **dadurch gekennzeichnet, dass** die Gewindehülse (4) auf einer dem Einstellschlüssel (1) zugewandten Oberseite eine Öffnung (40) aufweist, in die das Drehelement (2) eingeführt ist.

6. Vorrichtung nach Anspruch 4 oder 5, **dadurch gekennzeichnet, dass** die Gewindehülse (4) zumindest ein Montageelement (41) aufweist, an das eine in der Höhe zu verstellende Platte (9) anbringbar ist, sodass die Platte (9) zwischen Gewindehülse (4) und Einstellschlüssel (1) angeordnet ist.

7. Vorrichtung nach Anspruch 6, **dadurch gekennzeichnet, dass** die Platte (9) einen konstanten Abstand (b) zwischen dem Einstellschlüssel (1) und dem Drehelement (2) bewirken kann.

8. Vorrichtung nach Anspruch 6 oder 7, **dadurch gekennzeichnet, dass** der Einstellschlüssel (1) von der Platte (9) abnehmbar ist.

9. Vorrichtung nach einem der Ansprüche 1 bis 8, **dadurch gekennzeichnet, dass** die Magnete (M1) des Einstellschlüssel und die Magnete des Drehelements (M2) einen konstanten Magnetabstand (I) aufweisen.

10. Vorrichtung nach einem der Ansprüche 1 bis 9, **dadurch gekennzeichnet, dass** das Stellorgan (6) auf einem Ausgleichsfuß (5) auf einem Untergrund gelagert ist.

11. Vorrichtung nach Anspruch 10, **dadurch gekennzeichnet, dass** der Ausgleichsfuß (5) ein Entkopplungselement (51) zur Schallentkopplung des Ausgleichsfußes (5) vom Untergrund aufweist.

12. Höhenverstellbares Bodenelement (13), vorzugsweise eine Bodenplatte einer Duschwanne, mit zumindest einer Vorrichtung (10) nach einem der Ansprüche 1 bis 11, wobei die Position des zwischen Einstellschlüssel (1) und Drehelement (2) angebrachten Bodenelements (13) durch Drehung des Einstellschlüssels (1) verstellbar ist.

## Claims

1. Device for adjusting the length (d) of a spacer element (3), **characterized in that** the device comprises a setting key (1) and a rotary element (2), the setting key (1) and the rotary element (2) each having at least one magnet (M1, M2), which magnets are arranged so as to transmit the rotational movement of the setting key (1) to the rotary element (2) via a generated magnetic field, and the rotary element (2) being designed as a driver for an actuator (6) of the spacer element (3), wherein the length (d) of the spacer element (3) in the direction of the rotational axis is changeable by rotating the actuator (6) with the rotary element (2).

2. Device according to claim 1, **characterized in that** the rotary element (2) is connected to the actuator (6) by means of an interlocking connection.

3. Device according to claim 2, **characterized in that** the interlocking connection is designed as a groove (22) in the longitudinal direction and associated tongue (62).

4. Device according to any of claims 1 to 3, **characterized in that** the spacer element (3) has a threaded sleeve (4) comprising an internal thread (42), which threaded sleeve is screwed onto an external thread (61) of the actuator (6), and **in that** the thread position of the internal thread (42) and external thread (61) changes the length (d) of the spacer element (3).

5. Device according to claim 4, **characterized in that** the threaded sleeve (4) has, on an upper side facing the setting key (1), an opening (40) into which the rotary element (2) is inserted.

6. Device according to either claim 4 or claim 5, **characterized in that** the threaded sleeve (4) has at least one mounting element (41) to which a plate (9) of which the height is to be adjusted can be attached such that the plate (9) is arranged between the threaded sleeve (4) and setting key (1).

7. Device according to claim 6, **characterized in that** the plate (9) can bring about a constant distance (b) between the setting key (1) and the rotary element (2).

8. Device according to either claim 6 or claim 7, **characterized in that** the setting key (1) can be removed from the plate (9).

9. Device according to any of claims 1 to 8, **characterized in that** the magnets (M1) of the setting key and the magnets of the rotary element (M2) have a constant magnet distance (I).

10. Device according to any of claims 1 to 9, **characterized in that** the actuator (6) is mounted on a levelling foot (5) on a base.

11. Device according to claim 10, **characterized in that** the levelling foot (5) has a decoupling element (51) for acoustically decoupling the levelling foot (5) from the base.

12. Height-adjustable floor element (13), preferably a floor plate of a shower tray, comprising at least one device (10) according to any of claims 1 to 11, wherein the position of the floor element (13) attached between the setting key (1) and rotary element (2) can be adjusted by rotating the setting key (1).

## Revendications

1. Dispositif de réglage de la longueur (d) d'un élément d'écartement (3), **caractérisé en ce que** le dispositif comprend une clé de réglage (1) et un élément rotatif (2), la clé de réglage (1) et l'élément rotatif (2) présentant chacun au moins un aimant (M1, M2) et étant agencés pour permettre la transmission du mouvement de rotation de la clé de réglage (1) sur l'élément rotatif (2) via un champ magnétique généré, dans lequel l'élément rotatif (2) est réalisé sous la forme d'un élément d'entraînement pour un actionneur (6) de l'élément d'écartement (3), et dans lequel, par rotation de l'actionneur (6) avec l'élément rotatif (2), la longueur (d) de l'élément d'écartement (3) est variable dans la direction de l'axe de rotation.

2. Dispositif selon la revendication 1, **caractérisé en ce que** l'élément rotatif (2) est relié à l'actionneur au moyen d'une liaison positive (6).

3. Dispositif selon la revendication 2, **caractérisé en ce que** la liaison positive est réalisée sous la forme d'une rainure (22) dans la direction longitudinale et d'un ressort associé (62).

4. Dispositif selon l'une des revendications 1 à 3, **caractérisé en ce que** l'élément d'écartement (3) présente un manchon fileté (4) comportant un filetage intérieur (42) qui est vissé sur un filetage extérieur (61) de l'actionneur (6), et **en ce que** la position filetée du filetage intérieur (42) et du filetage extérieur (61) modifie la longueur (d) de l'élément d'écartement (3).

5. Dispositif selon la revendication 4, **caractérisé en ce que** le manchon fileté (4) présente, sur une face supérieure tournée vers la clé de réglage (1), une ouverture (40) dans laquelle l'élément rotatif (2) est inséré.

6. Dispositif selon la revendication 4 ou 5, **caractérisé en ce que** le manchon fileté (4) présente au moins un élément de montage (41) sur lequel une plaque (9) réglable en hauteur peut être fixée, de sorte que la plaque (9) est disposée entre le manchon fileté (4) et la clé de réglage (1).

7. Dispositif selon la revendication 6, **caractérisé en ce que** la plaque (9) peut créer une distance constante (b) entre la clé de réglage (1) et l'élément rotatif (2).

8. Dispositif selon la revendication 6 ou 7, **caractérisé en ce que** la clé de réglage (1) est détachable de la plaque (9).

9. Dispositif selon l'une des revendications 1 à 8, **caractérisé en ce que** les aimants (M1) de la clé de réglage et les aimants de l'élément rotatif (M2) présentent un espacement magnétique constant (I).

10. Dispositif selon l'une des revendications 1 à 9, **caractérisé en ce que** l'actionneur (6) est monté sur un talon de compensation (5) sur un support.

11. Dispositif selon la revendication 10, **caractérisé en ce que** le talon de compensation (5) comporte un élément de découplage (51) permettant un découplage acoustique du talon de compensation (5) du support.

12. Élément de fond réglable en hauteur (13), de préférence une plaque de fond d'un bac de douche, comprenant au moins un dispositif (10) selon l'une des revendications 1 à 11, dans lequel la position de l'élément de fond (13) monté entre la clé de réglage (1) et l'élément rotatif (2) est réglable par rotation de la clé de réglage (1).
